# EUROPÄISCHE PATENTSCHRIFT

(11) **EP 0 582 543 B1**
(45) Veröffentlichungstag und Bekanntmachung des Hinweises auf die Patenterteilung: **14.01.1998**
(21) Anmeldenummer: 93810488.2
(22) Anmeldetag: 07.07.1993
(51) Int. Cl.: F16L 13/16, B21D 39/04

(54) **Zur Herstellung einer Rohrverbindung dienende Kupplungsvorrichtung**
Pipe coupling device
Dispositif de raccordement de tuyaux

(30) Priorität: 07.07.1992 CH 2138/92
(43) Veröffentlichungstag der Anmeldung: 09.02.1994
(60) Teilanmeldung: 96113684.3
(73) Patentinhaber: STEBI-TECH AG, 4052 Basel (CH)
(72) Erfinder: Haener, Gottfried, CH-4148 Pfeffingen (CH)
(74) Vertreter: Eder, Carl E.

(56) Entgegenhaltungen:
- EP-B- 0 159 997
- AT-B- 318 324
- DE-A- 2 159 885
- DE-A- 2 713 243
- DE-U- 9 016 310
- FR-A- 490 606
- US-A- 3 019 520
- US-A- 3 848 451

## Beschreibung

Die Erfindung betrifft eine zur Herstellung einer unlösbaren Rohrverbindung dienende Kupplungsvorrichtung gemäss dem Oberbegriff des Anspruchs 1.

Eine erste Kupplungsvorrichtung zur Herstellung einer Rohrverbindung, bei welcher die beiden miteinander zu verbindenden Rohrendabschnitte durch Kaltverformung mit einer hohlzylinderförmigen Stützhülse zu einer festen Verbindung verpresst sind, ist aus der EP-B 0 159 997 bekannt. Diese Kupplungsvorrichtung weist insbesondere fünf Bauteile auf, nämlich eine Stützhülse, zwei auf die beiden Rohrenden aufzuschieben bestimmte Presshülsen und zwei Pressringe. Die Stützhülse besitzt dabei ihrerseits zwei durch einen Flansch miteinander verbundene Stutzen, die zum Einsetzen in die beiden Rohrendabschnitte bestimmt sind.

Bei der Herstellung der Rohrverbindung wird jeder einzelne Rohrendabschnitt mittels eines axial zu verschiebenden Pressringes zu einer formschlüssigen Verbindung mit dem in das Rohrende eingesetzten Stutzen der Stützhülse verpresst. Die auf jedes Rohrende aufgeschobene Presshülse wird dabei derart verformt, dass u.a. das Material der Presshülse in der Wulstzone radial nach innen verdrängt wird, wodurch sowohl die Rohrwandung als auch der Stutzen eine ringförmige Einbuchtung erfahren.

Diese Kupplungsvorrichtung weist nun die Nachteile auf, dass im verpressten Zustand die beiden Rohre nur durch die Stützhülse miteinander verbunden sind und dass die Herstellung der Rohrverbindung wegen der relativ grossen Anzahl herzustellender und miteinander zu verbindenden Teile relativ kompliziert und verhältnismässig teuer ist.

Zudem sind die beiden Pressringe nach der Herstellung einer derartigen Rohrverbindung nicht optimal gegen eine axiale Verschiebung gesichert, was Nachteile für die Betriebssicherheit und Lebensdauer der Rohrverbindung zur Folge hat.

Eine zweite Kupplungsvorrichtung der erfindungsgemässen Art ist aus der FR-B 490 606 bekannt. Diese Kupplungsvorrichtung dient dabei insbesondere der formschlüssigen Verbindung von zwei metallischen Rohren und weist dazu eine in die beiden Rohrendpartien einzusetzen bestimmte Stützhülse sowie eine über die beiden Rohrenden zu schiebende Presshülse auf. Die beiden Hülsen sind dabei mit zueinander versetzten, ringförmigen Rippen versehen, so dass beim radialen Verpressen von Stütz- und Presshülse die beiden Rohrendabschnitte eine im Längsschnitt wellenlinienförmige Form annehmen.

Sowohl beim Einsetzen der Stützhülse in als auch beim Aufschieben der Presshülse auf die beiden Rohrenden besteht nun bei der Verwendung der aus der FR-B 490 606 bekannten Kupplungsvorrichtung die Gefahr, dass die beiden Rohrenden nicht optimal, d.h. mit gleich langen Endabschnitten auf die Stützhülse aufgeschoben und die Presshülse nicht vollumfänglich über der Stützhülse positioniert werden, was Nachteile für ein sicheres und formschlüssiges Verpressen der beiden Rohre zur Folge hat.

Der Erfindung liegt nun ausgehend von der aus der FR-B 490 606 bekannten Kupplungsvorrichtung die Aufgabe zu Grunde, eine neue Kupplungsvorrichtung zu schaffen, mit der Nachteile der bekannten Kupplungsvorrichtungen behoben werden. Die Kupplungsvorrichtung soll dabei insbesondere aus nur wenigen miteinander zu verbindenden Teilen bestehen, eine sichere Positionierung der Rohrenden in dem von der Stütz- und Presshülse gebildeten Ringspalt sowie die Herstellung einer langlebigen und dichten Rohrverbindung ermöglichen.

Diese Aufgabe wird erfindungsgemäss durch eine Kupplungsvorrichtung mit den Merkmalen des Patentanspruchs 1 gelöst.

Vorteilhafte Ausgestaltungen der Kupplungsvorrichtung gehen aus den abhängigen Ansprüchen hervor.

Nachfolgend wird anhand der Zeichnung ein Ausführungsbeispiel der Erfindung beschrieben. In der Zeichnung zeigt
die Figur 1 einen Teil eines Längsschnittes einer Kupplungsvorrichtung vor dem Verpressen,
die Figur 2 die in der Figur 1 dargestellte Kupplungsvorrichtung nach dem Verpressen der beiden Hülsen,
die Figur 3 eine schematische Darstellung einer Pressvorrichtung mit einer zum Verpressen bestimmten Rohrverbindung und
die Figur 4 einen Schnitt nach der Linie IV - IV der Figur 3.

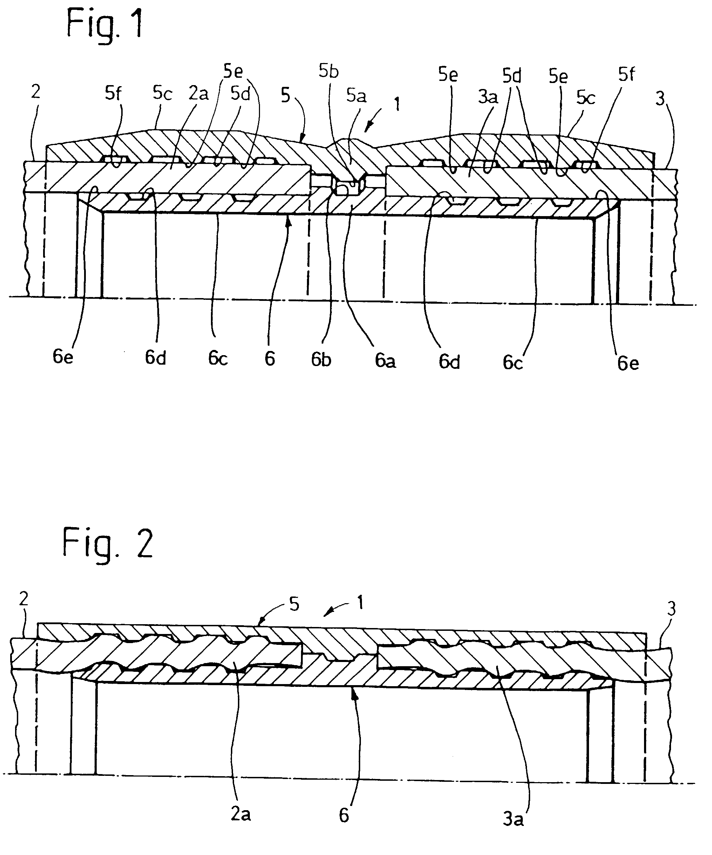

Die in den Figuren 1 und 2 dargestellte und als ganzes mit 1 bezeichnete Kupplungsvorrichtung dient zum Verbinden der beiden Rohre 2 und 3. Sie besteht aus einer die Rohrendabschnitte 2a und 3a umschliessenden Presshülse 5 und einer in die Rohrendabschnitte 2a und 3a eingesetzten Stützhülse 6. Die beiden Hülsen 5 und 6 sind im wesentlichen hohlzylinderförmig und weisen je einen als Anschlag für die beiden Rohrenden dienenden Mittelabschnitt 5a bzw. 6a sowie zwei zueinander symmetrische und zum Anliegen an die Aussen- bzw. Innenfläche der beiden Rohrendabschnitte 2a und 3a bestimmte Abschnitte 5c bzw. 6c auf. Der Mittelabschnitt 6a der Stützhülse 6 besitzt dabei eine zur Hülsenachse koaxial verlaufende Rille 6b, während der Mittelabschnitt 5a der Presshülse 5 mit einer in diese Rille 6b passenden Rippe 5b versehen ist.

Die Presshülse 5 und die Stützhülse 6 weisen schliesslich an ihrer zylindrischen Innen- bzw. Aussenfläche zur Hülsenachse koaxial verlaufende Rillen 5d bzw. 6d auf. Die beiden Hülsen sind dabei derart ausgebildet, dass die zwischen jeweils zwei Rillen 5d vorhandenen, ringförmigen Rippen 5e der Presshülse 5 beim Zusammensetzen der Kupplungsvorrichtung 1 gegenüber den Rillen 6d der Stützhülse 6 zu liegen kommen.

Die beiden miteinander zu verbindenden Rohre 2 und 3 sowie auch die Presshülse 5 und die Stützhülse 6 bestehen in diesem Ausführungsbeispiel je aus einem einstückigen, metallischen Körper.

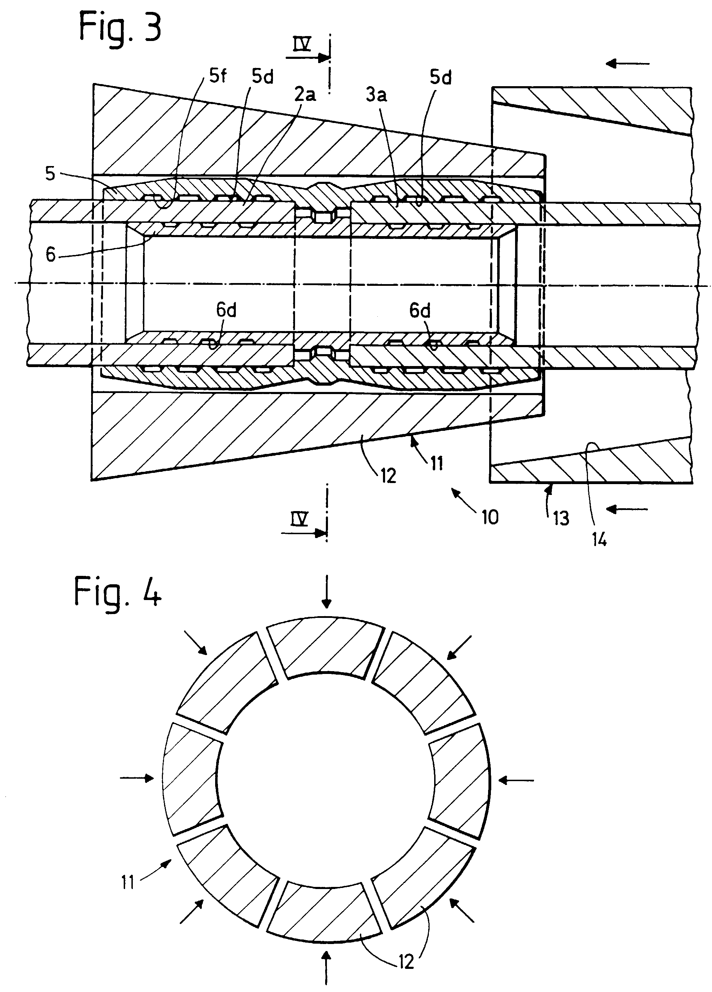

Zur Herstellung der in der Figur 2 dargestellten unlösbaren Rohrverbindung werden zuerst die Stützhülse 6 und die Presshülse 5 auf eines der beiden Rohre 2 oder 3 aufgesetzt, worauf das andere Rohr in den durch Presshülse 5 und Stützhülse 6 gebildeten Zwischenraum eingesetzt wird. Anschliessend werden die beiden Rohrendabschnitte 2a und 3a mit der Presshülse 5 und der Stützhülse 6 radial verpresst, wozu man beispielsweise die in der Figur 3 und zum Teil in der Figur 4 schematisch dargestellte Pressvorrichtung 10 verwenden kann.

Die Pressvorrichtung 10 weist dabei eine innen zylindrische und aussen konusförmige zum Aufschieben auf die Presshülse 5 bestimmte rotationssymmetrische Hülse 11 auf. Diese in der Figur 4 im Querschnitt dargestellte Hülse 11 besteht aus mehreren, beispielsweise acht, zur Rotationsachse parallel verlaufenden und in Abstand voneinander stehenden Segmenten 12, welche durch - in der Zeichnung nicht dargestellte - Verbindungsmittel zusammengehalten werden. Neben der Hülse 11 weist die Pressvorrichtung 10 eine zum Aufschieben auf die erste Hülse 11 bestimmte zweite Hülse 13 auf. Diese ist mindestens gleich lang wie die Hülse 11 und besitzt eine auf die Hülse 11 passende konusförmige Bohrung 14. Zur Herstellung einer unlösbaren Rohrverbindung wird nun die Hülse 13 mittels eines - in der Figur 3 nicht dargestellten - pneumatisch oder mechanisch verschiebbaren Verschiebeorganes derart auf die die Presshülse 5 umschliessende Hülse 11 aufgeschoben, dass die Segmente 12 der Hülse 11 radial nach innen verschoben und dadurch die Presshülse 5 und die Stützhülse 6 mit den beiden Rohrendabschnitten 2a und 3a verpresst werden.

Die Hülse 13 besteht dabei beispielsweise aus zwei miteinander lösbar verbundenen Halbschalen, so dass sie nach der Herstellung der Rohrverbindung ohne Schwierigkeiten entfernt werden kann.

Nachdem nun die Kupplungsvorrichtung und der allgemeine Ablauf der Herstellung einer Rohrverbindung beschrieben wurde, sollen nun die Vorteile der Erfindung näher erläutert werden.

Da die erfindungsgemässe Kupplungsvorrichtung 1 nur aus einer Stützhülse 6 und einer Presshülse 5 besteht und da diese beiden radial miteinander und mit den beiden Rohrendabschnitten 2a und 3a verpresst werden, lässt sich die Herstellung der Rohrverbindung stark vereinfachen und die Qualität und Betriebssicherheit der Rohrverbindung verbessern.

Zudem weist die in der Figur 2 dargestellte Rohrverbindung eine zwischen den beiden Rohren 2 und 3 angeordnete und aus den beiden mittleren Abschnitten 5a und 6a der beiden Hülsen 5 und 6 gebildete Wandverstärkung auf, so dass sich dadurch die Gefahr eines Bruches der Rohrverbindung aufgrund von auf die Rohrverbindung wirkenden äusseren Kräften und/oder aufgrund von Erosions- und/oder Korrosionseinflüssen verringern lässt.

Da Presshülse 5 und Stützhülse 6 ringförmige und in Längsrichtung gegeneinander versetzte Rillen 5d bzw. 6d aufweisen und die beiden Rohrendabschnitte 2a und 3a nach dem Verpressen eine im Längsschnitt wellenlinienförmige Form annehmen, werden die beiden Rohrendabschnitte 2a und 3a an mehreren Stellen - nämlich zwischen jeweils zwei Rillen 5d bzw. 6d - dicht mit der Presshülse 5 sowie mit der Stützhülse 6 verpresst und zudem gegen eine axiale Verschiebung gesichert, so dass dadurch die Betriebssicherheit und eine hohe Lebensdauer der Rohrverbindung gewährleistet werden kann.

Die Bildung eines Spaltes zwischen Stützhülse 6 und einem der Rohrenden 2a oder 3a sowie die damit verbundene Gefahr einer Spaltkorrosion oder eines Durchdringens eines durch die Rohrverbindung hindurchströmenden Mediums lässt sich durch eine an den Randbereichen der Stützhülse 6 wirksame Pressverbindung vermeiden. In diesem Fall sieht die Erfindung vor, dass die Presshülse 5 mit ihren Enden über die Stützhülse 6 herausragt und mit einer die zylindrische Innenfläche umschliessenden Vertiefung 5f versehen ist, welche dem Rand 6e der Stützhülse gegenüber liegt, so dass die Rohrwandung beim Pressen in diese Vertiefung 5f gepresst und dadurch und durch die über die Stützhülse 6 herausragenden Enden der Presshülse 5 radial nach innen gebogen wird. Auf diese Weise besteht bei ordnungsgemässer Herstellung der Rohrverbindung die Gewähr, dass an den beiden Endabschnitten der Stützhülse 6 eine wirksame Pressverbindung zwischen der Stützhülse 6 und jedem der Rohre 2 und 3 entsteht.

Bei der Wahl der Kupplungsvorrichtung sind die Beschaffenheit, die mechanische Beanspruchung, die Art sowie auch die Verwendung der miteinander zu verbindenden Rohre zu berücksichtigen. Daher sei an dieser Stelle darauf hingewiesen, dass die anhand der Figuren 1 und 2 beschriebene Kupplungsvorrichtung nur eine Auswahl von mehreren möglichen Ausführungsformen der Erfindung darstellt und in verschiedener Hinsicht geändert werden kann.

So besteht zum Beispiel die Möglichkeit, die Press- oder die Stützhülse aus einem aus Kunststoff bestehenden Hohlzylinder herzustellen, der zur Bildung der Rillen mit zur Zylinderachse koaxial verlaufenden Metallrippen versehen wird.

Zudem kann die Kupplungsvorrichtung selbstverständlich auch zum Verbinden zweier Kunsstoffrohre oder eines Kunststoffrohres mit einem Metallrohr verwendet werden.

## Patentansprüche

1. Herstellung einer unlösbaren Rohrverbindung dienende Kupplungsvorrichtung mit einer zum Einsetzen in die beiden miteinander zu verbindenden Rohre (2, 3) bestimmten hohlzylinderförmigen Stützhülse (6) und einer zum Aufschieben auf die beiden Rohre (2, 3) bestimmten hohlzylinderförmigen Presshülse (5), wobei die Stützhülse (6) an ihrer Aussenfläche und die Presshülse (5) an ihrer Innenfläche mit ringförmig verlaufenden Rillen (5d, 6d) versehen sind, und wobei diese Rillen (5d, 6d) so angeordnet sind, dass die zwischen jeweils zwei Rillen (5d) angeordneten ringförmigen Rippen (5e) der Presshülse (5) beim Zusammensetzen der Kupplungsvorrichtung (1) gegenüber den Rillen (6d) der Stützhülse (6) zu liegen kommen, wobei die Kupplungsvorrichtung (1) nur aus der Stützhülse (6) und der Presshülse (5) besteht, dadurch gekennzeichnet, dass die Stützhülse (6) und die Presshülse (5) je mindestens eine als Anschlag für die beiden Rohrenden dienende Rippe (5b) aufweisen.

2. Kupplungsvorrichtung nach Anspruch 1, dadurch gekennzeichnet, dass die Presshülse (5) länger ist als die Stützhülse (6).

3. Kupplungsvorrichtung nach Anspruch 1 oder 2, dadurch gekennzeichnet, dass die Press- und/oder Stützhülse (5 bzw. 6) aus einem aus Kunststoff bestehenden Hohlzylinder gebildet ist, wobei jedoch die Rippen aus Metall bestehen.

## Claims

1. Coupling device for production of an inseparable pipe connection, comprising a support sleeve (6) of hollow cylindrical shape intended for use in the two pipes (2, 3) to be connected together and a press sleeve (5) of hollow cylindrical shape intended for pushing onto the two pipes (2, 3), wherein the support sleeve (6) at its outer surface and the press sleeve (5) at its inner surface are provided with annularly extending grooves (5d, 6d) and wherein these grooves (5d, 6d) are so arranged that the annular ribs (5e), which are arranged each time between two grooves (5d), of the press sleeve (5) come to lie opposite the ribs (6d) of the support sleeve (6) on assembly of the coupling device, wherein the coupling device (1) consists only of the support sleeve (6) and the press sleeve (5), characterised thereby that the support sleeve (6) and the press sleeve (5) each have at least one rib (5b) serving as an abutment for the two pipe ends.

2. Coupling device according to claim 1, characterised thereby that the press sleeve (5) is longer than the support sleeve (6).

3. Coupling device according to claim 1 or 2, characterised thereby that the press sleeve and/or support sleeve (5 or 6) is formed from a hollow cylinder consisting of synthetic material, wherein, however, the ribs consist of metal.

## Revendications

1. Dispositif d'accouplement pour établir une liaison tubulaire indissociable, comprenant une douille d'appui (6) cylindrique creuse, destinée à être insérée dans les deux tuyaux (2, 3) devant être raccordés, et une douille de compression (5) cylindrique creuse, destinée à être enfilée sur les deux tuyaux (2, 3), la douille d'appui (6) et la douille de compression (5) étant respectivement pourvues, sur leur surface extérieure et sur leur surface intérieure, de rainures (5d, 6d ) s'étendant annulairement, ces rainures (5d, 6d) étant agencées de façon telle que les nervures annulaires (5e) de la douille de compression (5), intercalées entre deux rainures respectives (5d), viennent se placer en vis-à-vis des rainures (6d) de la douille d'appui (6) lors de l'assemblage du dispositif d'accouplement (1), ledit dispositif d'accouplement (1) étant composé uniquement de la douille d'appui (6) et de la douille de compression (5), caractérisé par le fait que la douille d'appui (6) et la douille de compression (5) présentent, à chaque fois, au moins une nervure (5b) servant de butée pour les deux extrémités des tuyaux.

2. Dispositif d'accouplement selon la revendication 1, caractérisé par le fait que la douille de compression (5) est plus longue que la douille d'appui (6).

3. Dispositif d'accouplement selon la revendication 1 ou 2, caractérisé par le fait que la douille de compression et/ou la douille d'appui (5, respectivement 6) est formée d'un cylindre creux constitué d'une matière plastique, les nervures consistant cependant en un métal.
